# EUROPÄISCHE PATENTSCHRIFT

(11) **EP 2 296 077 B1**
(45) Veröffentlichungstag und Bekanntmachung des Hinweises auf die Patenterteilung: **13.12.2017**
(21) Anmeldenummer: 09013527.8
(22) Anmeldetag: 27.10.2009
(51) Int. Cl.: G06F 3/03, H01C 10/36, H03K 17/945, G01D 5/16

(54) **Verfahren zum Einstellen von Betriebsparametern eines Sensors und Sensor zum Nachweis einer physikalischen Messgröße**
Method for setting the operational parameters of a sensor and sensor for detecting a physical quantity
Procédé de réglage de paramètres de fonctionnement d'un capteur et capteur pour une grandeur de mesure physique

(30) Priorität: 04.09.2009 EP 09011393
(43) Veröffentlichungstag der Anmeldung: 16.03.2011
(73) Patentinhaber: Pepperl + Fuchs GmbH, 68307 Mannheim (DE)
(72) Erfinder: Teichert, Ralf, 10965 Berlin (DE); Bartels, Gunnar, 10715 Berlin (DE)
(74) Vertreter: Schiffer, Axel Martin

(56) Entgegenhaltungen:
- DE-A1- 19 548 292
- DE-A1- 19 620 575
- DE-A1-102008 043 262
- DE-U1-202006 019 447

## Beschreibung

Die vorliegende Erfindung bezieht sich in einem ersten Aspekt auf ein Verfahren zum Einstellen von Betriebsparametern eines Sensors, insbesondere zum Einstellen einer Tastweite und/oder einer Empfindlichkeit bei einem optischen Sensor, nach dem Oberbegriff des Anspruchs 1.

In einem zweiten Gesichtspunkt betrifft die Erfindung einen Sensor zum Nachweis einer physikalischen Messgröße nach dem Oberbegriff des Anspruchs 12.

Bei bekannten Verfahren zum Einstellen von Betriebsparametern eines Sensors, der zum Einstellen mindestens eines Betriebsparameters mindestens ein analoges Stellglied aufweist, wobei ein Hub des analogen Stellglieds einen Einstellbereich und einen Funktionsbereich aufweist, wird eine Stellung des analoges Stellglieds gemessen, der Einstellbereich wird monoton auf ein Parameterintervall abgebildet und ein zu einer gemessenen Stellung des analoges Stellglieds gehörender Betriebsparameterwert wird für den Sensor übernommen.

Gattungsgemäße Sensoren zum Nachweis einer physikalischen Messgröße, insbesondere zum Nachweis von Objekten, weisen ein Sensorelement zum Messen der physikalischen Messgröße, eine Steuer- und Auswerteeinheit zum Ansteuern des Sensorelements und zum Auswerten der von dem Sensorelement gelieferten Messdaten sowie ein mit der Steuer- und Auswerteeinheit zusammenwirkendes analoges Stellglied zum Einstellen von Betriebsparametern des Sensors auf. Hierbei weist ein Hub des analoges Stellglieds mindestens einen Einstellbereich und einen Funktionsbereich auf und die Steuer- und Auswerteeinheit ist eingerichtet zum monotonen Abbilden des Einstellbereichs auf ein Parameterintervall und zum Übernehmen eines zu einer gemessenen Stellung des analoges Stellglieds gehörenden Betriebsparameterwertes für den Sensor.

Aus DE 195 48 292 A1 ist eine Vorrichtung mit einem Potentiometer zur Eingabe von Einstellwerten in elektronischen Geräten bekannt. Damit ein einzustellender Wert über einen großen Bereich einstellbar ist, wird der Wert abhängig von der Einstellung des Potentiometers laufend geändert, d. h. solange der zugehörige Potentiometerbereich eingestellt bleibt.

Bekannt sind außerdem Potentiometer, die zusätzlich zu dem zum Einstellen eines Wertes fungierenden Bereiches einen Schaltbereich aufweisen, mit dem verschiedene Funktionen aktiviert werden können. So wird in DE 196 20 106 C1 eine Vorrichtung zum Betätigen eines in einem Fahrzeug angeordneten Verstellantriebs beschrieben. Hierbei sind über ein Bedienelement zwei Stellbereiche eines Potentiometers wählbar. Im ersten Stellbereich kann eine kontinuierliche Änderung einer Einstellung vorgenommen werden und im zweiten Stellbereich kann eine Schaltfunktion ausgewählt werden.

Ein weiteres Potentiometer mit einer Unterteilung in einen Bereich, in dem ein Wert kontinuierlich geändert werden kann, und einen Bereich, der ein Schalten auslöst, wird in DE 197 19 579 C2 beschrieben. Hier wird mit einem Schalthebel das Potentiometer eingestellt, um eine Scheibenwischergeschwindigkeit zu steuern.

In der nachveröffentlichten Schrift DE 10 2008 043 262 A1 ist ein Bedienelement zur Einstellung eines Messwertaufnehmers für die Automatisierungstechnik beschrieben. Bei dem Bedienelement kann es sich um ein Singleturn-Potentiometer handeln. Wird ein Stellglied des Potentiometers für eine vorgegebene Zeitdauer in einen Randbereich geführt, so kann eine hinterlegte Funktion, beispielsweise ein Lernmodus, ausgewählt werden.

Aus DE 196 20 575 A1 ist eine Schaltungsanordnung mit einem Potentiometer zur Einstellung der Parameter von elektronischen Geräten bekannt. Das Potentiometer weist eine Einstellskala auf, wobei in einer Wertetabelle für jeden Skalenwert der Einstellskala ein bestimmter Wert abgespeichert ist. Abhängig von dem am Potentiometer eingestellten Skalenwert wird ein Parameter des elektronischen Geräts auf den entsprechenden abgespeicherten Wert eingestellt.

Gegenstand von DE 20 2006 010 447 U1 ist ein berührungsempfindlicher Schieberegler. Dieser weist einen berührungsempfindlichen Stellstreifen zum Eingeben eines Stellwerts auf. Zudem ist ein Tastschalter vorhanden, mit dem der Stellwert in Abhängigkeit von der Dauer, für die der Tastschalter betätigt wird, verändert werden kann.

Außerdem sind Vorrichtungen bekannt, die zur Verbesserung der Funktionalität Potentiometer mit Schaltern kombinieren. In DE 10 2007 011 658 A1 wird ein elektrischer Schalter beschrieben, der eine Segmentierung in verschiedene Kontaktabschnitte aufweist. Eine kontinuierliche Einstellung eines Parameters ist durch eine Widerstandsschicht innerhalb eines Kontaktabschnittes möglich.

Aus DE 32 23 641 C2 ist eine Kombination aus einem Drehpotentiometer und einem Schalter bekannt, wobei die Achsen des Potentiometers und des Schalters miteinander gekoppelt sind.

Für die Einstellung am analogen Stellglied ist die Funktionsweise des Sensors grundsätzlich nicht bedeutsam. Das analoge Stellglied kann dem Anwender über eine Öffnung des Sensorgehäuses zugänglich sein, so dass er über das analoge Stellglied einen oder mehrere Betriebsparameter des Sensors an die jeweiligen Einsatzbedingungen anpassen kann.

Eine besonders wichtige Größe beim Einstellen eines Parameters mit Hilfe eines analogen Stellglieds ist die Einstellungsgenauigkeit, die das analoge Stellglied bietet. Hierfür ist die Größe des am analogen Stellglied verfügbaren Einstellbereichs bzw. im Fall eines Drehpotentiometers die Anzahl möglicher Umdrehungen am Drehpotentiometer bedeutsam. Je größer der Einstellbereich ist, bzw. je höher die Anzahl der möglichen Umdrehungen ist, desto genauer kann ein Anwender den Wert des Parameters einstellen. Es werden sowohl so genannte Multiturn-Potentiometer, wie z. B. Wendelpotentiometer, verwendet, die mehr als eine Umdrehung ermöglichen, als auch so genannte Singleturn-Potentiometer, die weniger als eine Umdrehung ermöglichen.

Während Multiturn-Potentiometern im Vergleich zu Singleturn-Potentiometern den Vorteil einer höheren Einstellungsgenauigkeit mit sich bringen, ist hiermit jedoch der Nachteil höherer Kosten und größerer geometrischer Abmessungen verbunden.

Als eine **Aufgabe** der Erfindung kann angesehen werden, ein Verfahren zum Einstellen von Betriebsparametern bei einem Sensor anzugeben, welches bei geringen Kosten eine hohe Einstellungsgenauigkeit eines Betriebsparameters ermöglicht.

Außerdem soll ein Sensor zum Nachweis einer physikalischen Messgröße geschaffen werden, dessen Betriebsparameter in kosteneffizienter Weise präzise eingestellt werden können.

Diese Aufgabe wird durch das Verfahren mit den Merkmalen des Anspruchs 1 und durch den Sensor mit den Merkmalen des Anspruchs 12 gelöst.

Vorteilhafte Varianten des erfindungsgemäßen Verfahrens und bevorzugte Ausgestaltungen der erfindungsgemäßen Vorrichtung sind Gegenstand der abhängigen Ansprüche und werden außerdem in der folgenden Beschreibung, insbesondere im Zusammenhang mit den Figuren, beschrieben.

Bei dem erfindungsgemäßen Verfahren zum Einstellen von Betriebsparametern eines Sensors ist der Funktionsbereich als Umschaltbereich gebildet und bei einer Stellung des analogen Stellglieds in dem Umschaltbereich erfolgt ein Umschalten des Parameterintervalls, auf welches der Einstellbereich abgebildet wird.

Bei dem Sensor der oben genannten Art ist erfindungsgemäß der Funktionsbereich als Umschaltbereich gebildet und die Steuer- und Auswerteeinheit ist eingerichtet zum Umschalten des Parameterintervalls, auf welches der Einstellbereich abgebildet ist, bei einer Stellung des analogen Stellglieds in dem Umschaltbereich.

Im Folgenden werden die Begriffe "Parameter" und "Betriebsparameter" synonym verwendet. Entsprechendes gilt für zusammengesetzte Wörter, die diese Begriffe enthalten.

Als erster Kerngedanke der Erfindung kann angesehen werden, dass mindestens einem Teilbereich des Hubs des analogen Stellglieds, der zur Einstellung eines Betriebsparameters fungiert und hier Einstellbereich genannt wird, Betriebsparameterintervalle variabel zuordenbar sind. Es wurde erkannt, dass die am analogen Stellglied einstellbare Genauigkeit umso besser ist, je kleiner das Betriebsparameterintervall ist, auf den der Einstellbereich abgebildet wird. Um bei hoher Genauigkeit gleichzeitig den Betriebsparameter über einen großen Bereich einstellen zu können, kann erfindungsgemäß ein Umschalten zwischen verschiedenen Betriebsparameterintervallen erfolgen.

Als wesentliche Idee der Erfindung kann erachtet werden, dass das Umschalten des Betriebsparameterintervalls, auf welches der Einstellbereich abgebildet ist, in mindestens einem zweiten Teilbereich des Hubs des analogen Stellglieds erfolgt, der hier als Umschaltbereich bezeichnet wird. Indem ein Teilbereich des Hubs des analogen Stellglieds als Umschaltbereich verwendet wird, sind vorteilhafterweise alle zur Einstellung eines Betriebsparameters notwendigen Bedienungselemente in einem einzigen analogen Stellglied vereint. Demnach ist es nicht erforderlich, dem Anwender weitere Schalter oder Regler bereitzustellen.

Als besonderer Vorteil der Erfindung kann angesehen werden, dass eine hohe Einstellgenauigkeit eines Betriebsparameters eines Sensors über einen sehr großen Bereich möglich ist, ohne dass hierzu teure und große Multiturn-Potentiometer benötigt werden. Bevorzugt wird die Erfindung mit kostengünstigen und kompakten Singleturn-Potentiometern eingesetzt.

Als weiterer Vorteil kann angesehen werden, dass handelsübliche Potentiometer verwendet werden können und keine spezifischen Komponenten notwendig sind.

Außerdem können vorteilhafterweise zusätzliche Funktionen durch die Interpretation des Potentiometerhubs in verschiedene Teilbereiche aktiviert werden.

Grundsätzlich können mit dem erfindungsgemäßen Verfahren und bei dem erfindungsgemäßen Sensor beliebige Betriebsparameter eingestellt werden. Besonders vorteilhaft können mit dem erfindungsgemäßen Verfahren und bei dem erfindungsgemäßen Sensor eine Tastweite und/oder eine Empfindlichkeit bei einem optischen Sensor eingestellt werden.

Prinzipiell kann als analoges Stellglied oder analoges Stellelement jede Einrichtung verwendet werden, mit welcher eine physikalische Größe in analoger Weise, das heißt im Wesentlichen kontinuierlich innerhalb eines bestimmten Bereichs, nämlich des Hubs dieses analogen Stellglieds, eingestellt werden kann. Besonders bevorzugt wird als analoges Stellglied ein Potentiometer verwendet.

Es können aber auch andere analoge Stellglieder eingesetzt werden, beispielsweise ein kapazitiver Sensor oder eine Lichtschranke, bei der mit einem Betätigungselement der Lichtweg variabel unterbrochen werden kann.

Bei einer bevorzugten Variante des erfindungsgemäßen Verfahrens weist der Hub des analogen Stellglieds einen weiteren Umschaltbereich auf. Bei einer Stellung des analogen Stellglieds im Umschaltbereich erfolgt ein Umschalten zu einem Parameterintervall mit größeren Parameterwerten und bei einer Stellung des analogen Stellglieds in dem weiteren Umschaltbereich erfolgt ein Umschalten zu einem Parameterintervall mit kleineren Parameterwerten. Hierdurch kann ein komfortables, leicht zu bedienendes und schnelles Umschalten zu sowohl größeren als auch kleineren Parameterwerten erfolgen.

Bei dem erfindungsgemäßen Verfahren erfolgt genau ein Umschalten des Parameterintervalls, wenn eine Verweilzeit der Stellung des analogen Stellglieds in einem Umschaltbereich eine vorgegebene Verweildauer erreicht. Dadurch wird eine bedienerfreundliche Eingabe ermöglicht, bei der eine kurzzeitige Auswahl eines Umschaltbereichs nicht zu einem unbeabsichtigten Umschalten des Parameterintervalls führt.

Bei einem weiteren Ausführungsbeispiel des erfindungsgemäßen Verfahrens erfolgt ein Umschalten zu einem Parameterintervall mit größeren oder kleineren Parameterwerten abhängig davon, ob ein Umschaltbereich innerhalb einer vorgegebenen Zeitspanne einmal oder zweimal ausgewählt wird. Insbesondere wenn nur ein Umschaltbereich vorhanden ist, kann hierdurch in einfacher Weise sowohl zu größeren als auch zu kleineren Parameterwerten umgeschaltet werden.

Um eine einfach zu bedienende Möglichkeit bereitzustellen, alle Parameterintervalle auszuwählen, sieht eine weitere Verfahrensvariante vor, dass die Parameterintervalle beim Umschalten der Parameterintervalle zyklisch durchlaufen werden.

Bei einer weiteren vorteilhaften Alternative des erfindungsgemäßen Verfahrens ist zum Stabilisieren einer gewählten Einstellung eines Parameterintervalls eine Umschalthysterese vorgesehen. Dazu muss nach einem erfolgten Umschalten des Parameterintervalls für ein erneutes Umschalten eine Stellung des analogen Stellglieds eingestellt werden, die von dem für das erfolgte Umschalten maßgeblichen Umschaltbereich um einen vorgegebenen Mindestwert beabstandet ist, bevor ein erneutes Auswählen des maßgeblichen Umschaltbereichs zu einem erneuten Umschalten des Parameterintervalls führt. Hierdurch kann ein unbeabsichtigtes mehrfaches Auswählen eines Umschaltbereiches vermieden werden.

Bei einer bevorzugten Variante des erfindungsgemäßen Verfahrens erfolgt das Umschalten der Parameterintervalle auf jeweils direkt angrenzende Parameterintervalle. Dadurch wird bei intuitiver Bedienung der gesamte Parameterbereich vollständig in Parameterintervalle unterteilt.

Alternativ oder ergänzend erfolgt das Umschalten des Parameterintervalls auf ein Parameterintervall, das mit einem zuvor ausgewählten Parameterintervall überlappt. Gerade wenn ein gewünschter, einzustellender Parameterwert in einem Randbereich eines eingestellten Parameterintervalls liegt, kann durch überlappende Parameterintervalle vorteilhafterweise erreicht werden, dass eine Feineinstellung um jeden beliebigen Parameterwert möglich ist.

Bei einem weiteren Ausführungsbeispiel des erfindungsgemäßen Verfahrens erfolgt das Umschalten des Parameterintervalls auf ein Parameterintervall, welches größer oder kleiner als ein zuvor ausgewähltes Parameterintervall ist. Insbesondere wenn der gesamte Wertebereich des Parameters mehrere Größenordnungen umfasst, kann es wünschenswert sein, dass sich die Größe des Parameterintervalls beispielsweise nach der Größe oder Höhe der in diesem Parameterintervall befindlichen Parameterwerte richtet. So kann z. B. ein erstes Parameterintervall Werte von 10 bis 100 umfassen, ein nächstes Parameterintervall Werte von 100 bis 1000 und ein weiteres Parameterintervall Werte von 1000 bis 10000.

Alternativ ist ebenfalls möglich, dass ein Parameterintervall den gesamten Wertebereich eines Betriebsparameters umfasst. In diesem Fall könnte durch eine Stellung des analogen Stellglieds in einem Umschaltbereich ein jeweils kleineres Parameterintervall eingestellt werden, wobei z. B. eine Stellung des analogen Stellglieds im ersten Umschaltbereich zu einem Umschalten auf ein Parameterintervall führt, welches die untere Hälfte des zuvor eingestellten Parameterintervalls umfasst, und eine Stellung des analogen Stellglieds im zweiten Umschaltbereich zu einem Umschalten auf ein Parameterintervall führt, welches die obere Hälfte des zuvor eingestellten Parameterintervalls umfasst.

Es kann vorgesehen sein, dass ein Umschalten auf ein größeres Parameterintervall dann erfolgt, wenn ein Umschaltbereich innerhalb einer vorgegebenen Zeitspanne zweimal ausgewählt wird.

Bei einer bevorzugten Variante des erfindungsgemäßen Verfahrens weist der Hub des analogen Stellglieds mindestens einen Aktivierungsbereich auf, wobei bei einer Stellung des analogen Stellglieds in dem Aktivierungsbereich eine zusätzliche Funktion aktiviert wird. Vorteilhafterweise kann hierdurch mit einem einzigen analogen Stellglied, beispielsweise einem einzigen Potentiometer, eine Vielzahl von Einstellungen vorgenommen werden.

Grundsätzlich kann der Hub, also der gesamte Verstellbereich des analogen Stellglieds, physikalisch unterschiedliche Bereiche, insbesondere einen oder mehrere Umschaltbereiche und/oder einen oder mehrere Aktivierungsbereiche, aufweisen. Diese Bereiche können auch physikalisch, beispielsweise durch Rastpunkte bei einem Potentiometer, getrennt sein.

Besonders bevorzugt handelt es sich aber bei den sogenannten Bereichen, also insbesondere den Umschaltbereichen und/oder den Aktivierungsbereichen, nur um Zuordnungen, die beispielsweise von einer Steuer- und Auswerteeinheit eines Sensors vorgenommen werden und durch welche die über den gesamten Hub- oder Verstellbereich des analogen Stellglieds grundsätzlich möglichen Werte den jeweils zugeordneten Bereichen zugewiesen werden.

Als zusätzliche Funktion kann bei einer Stellung des einzigen analogen Stellglieds in dem Aktivierungsbereich ein Einlernmodus, eine Änderung des Schaltmodus zwischen hell- und dunkelschaltend, eine Änderung einer Kontraststufe für den Sensor, und/oder ein Wechsel des Betriebsparameters, der durch das analoge Stellglied einstellbar ist, aktiviert werden. Im Fall des Wechsels des Betriebsparameters wird der Einstellbereich auf ein Parameterintervall des neu ausgewählten Betriebsparameters abgebildet. Während bei herkömmlichen Sensoren für die genannten Funktionen in der Regel jeweils eigene Schalter oder Potentiometer vorhanden sind, wird erfindungsgemäß nur ein einziges analoges Stellglied für die Funktionen benötigt.

Bei einer weiteren bevorzugten Verfahrensvariante sind im Einlernmodus bestimmte Werte nach dem Einlernen durch Variation des analogen Stellglieds innerhalb des Einstellbereichs veränderbar.

Prinzipiell kann der Einstellbereich linear auf ein Parameterintervall abgebildet werden. Es ist aber auch möglich, den Einstellbereich nichtlinear, insbesondere exponentiell oder logarithmisch, auf ein Parameterintervall abzubilden. Hierdurch kann innerhalb eines Parameterintervalls eine konstante relative Einstellungsgenauigkeit erreicht werden.

Bei einer vorteilhaften Variante des erfindungsgemäßen Verfahrens werden über eine Schnittstelle des Sensors Werte von Betriebsparametern des Sensors eingegeben. Von der Steuer- und Auswerteeinheit werden die Betriebsparameter auf die über die Schnittstelle eingegebenen Werte eingestellt. Außerdem wird von der Steuer- und Auswerteeinheit der Einstellbereich des Hubs des analogen Stellglieds auf ein Parameterintervall abgebildet, für welches der einer aktuellen Stellung des analogen Stellglieds zugeordnete Wert eines Betriebsparameters mit dem über die Schnittstelle eingegebenen Wert dieses Betriebsparameters übereinstimmt.

In diesem Zusammenhang sieht eine zweckmäßige Verfahrensvariante bei einer Eingabe der Werte von Betriebsparametern über die Schnittstelle vor, dass die Intervallgrenzen beziehungsweise die "offsets" des Parameterintervalls und/oder Intervallgrenzen benachbarter Parameterintervalle geeignet angepasst werden.

Es können aber auch bei einer Eingabe der Werte von Betriebsparametern über die Schnittstelle geeignete Funktionen f ermittelt werden, die zur Abbildung des Einstellbereichs auf ein Parameterintervall und/oder auf benachbarte Parameterintervalle verwendet werden. Die Funktion f kann also für jedes Parameterintervall neu ermittelt werden und kann z. B. eine lineare, exponentielle oder logarithmische Funktion sein.

Bei herkömmlichen analogen Stellgliedern, beispielsweise bei Potentiometern, ist die Stellung des analogen Stellglieds fest mit einem Absolutwert eines Betriebsparameters verbunden. In diesem Fall stünde eine über die Schnittstelle durchgeführte Parametereinstellung in Widerspruch zu der Potentiometerstellung. Demnach kann diese Schnittstellen-Funktionalität nicht ohne weitere Maßnahmen mit einem herkömmlichen Potentiometer kombiniert werden. Hingegen wird erfindungsgemäß der Stellung des analogen Stellglieds durch die Steuer- und Auswerteeinheit ein Wert des Betriebsparameters zugeordnet. Daher kann diese Zuordnung bei einer Eingabe eines Parameterwertes über die Schnittstelle geändert werden. Dadurch steht die Stellung des analogen Stellglieds nicht in Widerspruch zu dem eingestellten Parameterwert.

Außerdem kann über die Schnittstelle des Sensors ein Betriebsparameter aus mehreren Betriebsparametern ausgewählt werden, woraufhin von der Steuer- und Auswerteeinheit der Einstellbereich auf ein Parameterintervall des ausgewählten Betriebsparameters abgebildet wird.

Zusätzlich kann über die Schnittstelle des Sensors ein Einlernmodus des Sensors aktiviert werden, und/oder eine Änderung des Schaltmodus zwischen hell- und dunkelschaltend und/oder eine Änderung einer Kontraststufe für den Sensor können eingestellt werden.

Grundsätzlich kann das analoge Stellglied ein Potentiometer jeder beliebigen Art sein, z. B. ein lineares Potentiometer oder ein Drehpotentiometer mit einer beliebigen Anzahl an Umdrehungen. Bevorzugt weist das Potentiometer eine einzige Umdrehung auf. Diese Single-Turn-Potentiometer sind Platz sparend und günstig in der Herstellung.

Bei einer bevorzugten Ausführungsform des erfindungsgemäßen Sensors weist das Potentiometer an Grenzpunkten der Teilbereiche des Potentiometerhubs jeweils eine Schwelle höheren mechanischen Widerstands auf. Somit kann ein Benutzer vorteilhafterweise die Grenzen eines Teilbereichs fühlen und ein unbeabsichtigtes Einstellen eines anderen Teilbereichs vermeiden.

Zweckmäßig weist die Steuer- und Auswerteeinheit zum Ansteuern des Sensorelements und zum Einstellen von Betriebsparametern eine logische Einheit mit einem A/D-Wandler zum Digitalisieren des am analogen Stellglied eingestellten Wertes auf. Die logische Einheit kann insbesondere ein Mikro-Controller, ein FPGA oder eine GAL sein.

Um dem Benutzer eine vorgenommene Einstellung in einfacher und leicht verständlicher Weise anzuzeigen, kann eine, insbesondere optische und/oder akustische, Anzeigeeinrichtung zum Anzeigen der Stellung des analogen Stellglieds und/oder zur Anzeige einer ausgelösten Umschaltfunktion und/oder mindestens eines eingestellten Parameterintervalls vorhanden sein.

Ebenfalls bevorzugt ist eine Ausführungsform des erfindungsgemäßen Sensors, bei dem der Hub des analogen Stellglieds mindestens einen weiteren Umschaltbereich aufweist und der Einstellbereich zwischen dem Umschaltbereich und dem weiteren Umschaltbereich angeordnet ist. Somit kann der zum Umschalten zu kleineren Parameterwerten fungierende Umschaltbereich benachbart zum kleinsten Wert des Einstellbereichs angeordnet sein, während der zum Umschalten zu größeren Parameterwerten fungierende Umschaltbereich benachbart zum größten Wert des Einstellbereichs angeordnet ist. Dadurch ergibt sich die Funktionszuordnung der Teilbereiche des Hubs des analogen Stellglieds einem Benutzer in intuitiver Weise.

Bei einer vorteilhaften Ausführung des erfindungsgemäßen Sensors weist dieser eine Sensorschnittstelle auf, über welche Werte von Betriebsparametern des Sensors eingebbar sind und/oder zusätzliche Funktionen des Sensors einstellbar oder aktivierbar sind. Dadurch ist eine flexible Eingabe von Einstellungen für den Sensor möglich.

Bei einem weiteren bevorzugten Ausführungsbeispiel des erfindungsgemäßen Sensors weist der Hub des analogen Stellglieds zum Aktivieren zusätzlicher Funktionen mindestens einen Aktivierungsbereich auf, der entweder benachbart zu den Umschaltbereichen angeordnet ist, oder den Einstellbereich teilt.

Ganz grundsätzlich sind auch Verfahrensvarianten und Sensoren möglich, bei denen überhaupt keine Umschaltbereiche vorhanden sind. Solche Varianten sind nicht Gegenstand der vorliegenden Patentanmeldung.

Für den Bedienungskomfort spielt die Anordnung der Teilbereiche eine wichtige Rolle. Für manche Einstellungen, wie z. B. dem Aktivieren eines Einlernmodus, ist es vorteilhaft, den zugehörigen Aktivierungsbereich in der Mitte des Hubs des analogen Stellglieds anzuordnen, wodurch der Einstellbereich in einen linksseitigen und einen rechtsseitigen Teil geteilt wird. Wird beispielsweise eine Tastweite des Sensors im Einlernmodus eingelernt, so kann diese anschließend durch den linksseitigen und rechtsseitigen Einstellbereich zu kleineren und größeren Werten verändert werden.

Hingegen empfiehlt sich für selten verwendete zusätzliche Funktionen eine Anordnung der zugehörigen Aktivierungsbereiche an den Rändern des Hubs des analogen Stellglieds, damit die häufig verwendeten Funktionen direkt benachbart zueinander angeordnet sind und somit in schneller und direkter Weise ausgewählt werden können.

Schließlich sieht eine bevorzugte Ausführungsform des erfindungsgemäßen Sensors und des erfindungsgemäßen Verfahrens vor, dass Teilbereiche des Hubs des analogen Stellglieds durch Zwischenbereiche getrennt sind, in denen die Steuer- und Auswerteeinheit eine zum zuletzt eingestellten Teilbereich gehörende Funktionalität beibehält oder keine Funktion ausführt. Hierdurch wird vorteilhafterweise sichergestellt, dass ausschließlich beabsichtigte Einstellungen umgesetzt werden. Ein ungewolltes Überschreiten der Grenze eines Teilbereichs führt somit nicht zu einer Einstellungsänderung.

Für einen Benutzer stellt das beschriebene Bedienkonzept nur eine geringfügige Abweichung von der Bedienung üblicher analoger Stellglieder, beispielsweise von Potentiometern, dar. Dem Einstellbereich ist eine weitestgehend vergleichbare Funktionalität zugeordnet, während in den Umschalt- und Aktivierungsbereichen neue Funktionen bereitgestellt werden.

Weitere Vorteile und Merkmale der Erfindung werden nachstehend mit Bezug auf die beigefügten schematischen Figuren beschrieben. Hierin zeigen:
- Fig. 1: eine schematische Darstellung eines erfindungsgemäßen Sensors;
- Fig. 2: einen Zahlenstrang, der mögliche Abbildungen des Einstellbereichs eines Potentiometerhubs auf Parameterintervalle angibt;
- Fig. 3: eine schematische Darstellung eines Potentiometerhubs bei einem ersten Ausführungsbeispiel des erfindungsgemäßen Verfahrens;
- Fig. 4: eine schematische Darstellung eines Potentiometerhubs bei einem zweiten Ausführungsbeispiel des erfindungsgemäßen Verfahrens;
- Fig. 5: eine schematische Darstellung des Potentiometerhubs bei einem dritten Ausführungsbeispiel des erfindungsgemäßen Verfahrens und
- Fig. 6: eine schematische Darstellung des Potentiometerhubs bei einem vierten Ausführungsbeispiel des erfindungsgemäßen Verfahrens;

Äquivalente Komponenten sind in allen Figuren mit denselben Bezugszeichen gekennzeichnet.

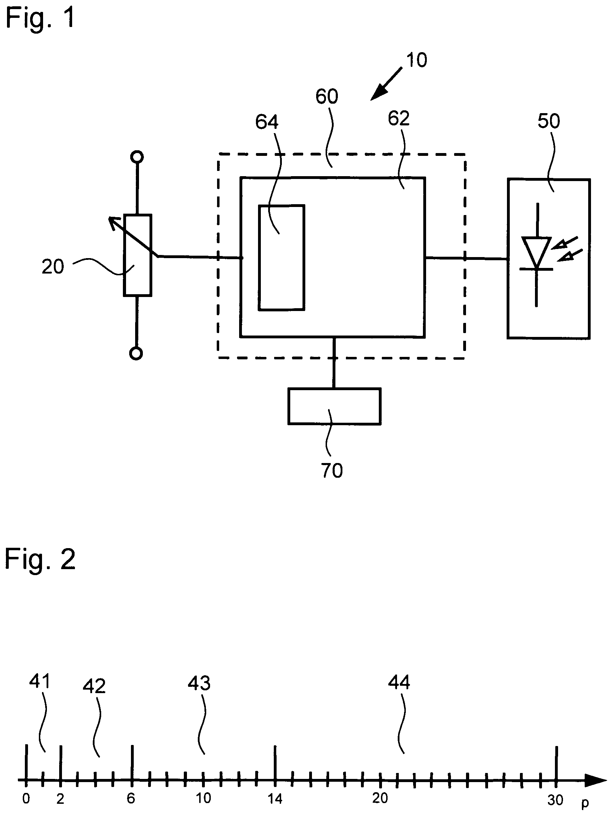

Fig. 1 zeigt ein Ausführungsbeispiel eines erfindungsgemäßen Sensors 10. Dieser umfasst ein Sensorelement 50 zum Messen einer physikalischen Messgröße, eine Steuer- und Auswerteeinheit 60 zum Ansteuern des Sensorelements 50 und zum Auswerten der von dem Sensorelement 50 gelieferten Messdaten sowie, als analoges Stellglied, ein Potentiometer 20, welches mit der Steuer- und Auswerteeinheit 60 in Verbindung steht.

Bei dem Sensorelement 50 kann es sich z. B. um einen Lichtdetektor zum Nachweis von Objekten handeln.

Das Potentiometer 20 dient dem Einstellen von Betriebsparametern p des Sensors 10 sowie gegebenenfalls dem Aktivieren zusätzlicher Funktionen des Sensors 10. Die von einem Benutzer eingestellte Potentiometerstellung wird von der Steuer- und Auswerteeinheit 60 gemessen. Letztere umfasst eine logische Einheit 62 mit einem Analog/Digital-Wandler 64. Der A/D-Wandler 64 wandelt die gemessene Potentiometerstellung in einen digitalen Wert um. Entsprechend diesem Wert stellt die Steuer- und Auswerteeinheit 60 einen Betriebsparameter p ein.

Ergänzend kann der Sensor 10 eine Schnittstelle 70 aufweisen, über die ebenfalls das Einstellen von Betriebsparametern p des Sensors 10 erfolgen kann. Diese Schnittstellen-Funktionalität wird im Folgenden näher beschrieben.

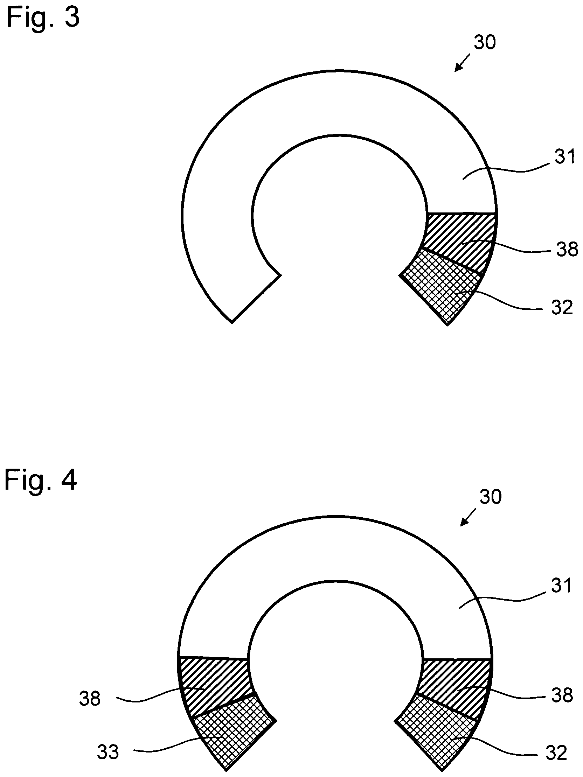

Mit Bezug auf die Fig. 2 und 3 wird die Zuordnung der Potentiometerstellung zu einem Wert eines Betriebsparameters p erläutert.

Fig. 3 zeigt den Potentiometerhub 30 eines Potentiometers 20. Unter Potentiometerhub 30 soll der einstellbare Bereich eines Potentiometers verstanden werden, der eine Änderung des Widerstands des Potentiometers bewirkt. Innerhalb des Potentiometerhubs 30 kann ein Benutzer eine beliebige Potentiometerstellung einstellen. Eine Steuer- und Auswerteeinheit 60, vgl. Fig. 1, misst die Potentiometerstellung und stellt einen Betriebsparameter p des Sensors 10 abhängig von der Potentiometerstellung ein.

Der in Fig. 3 dargestellte Potentiometerhub 30 weist einen Einstellbereich 31 auf, welcher monoton auf ein in Fig. 2 gezeigtes Parameterintervall 41,...,44 des Betriebsparameters p abgebildet wird. Erfindungsgemäß umfasst ein Parameterintervall 41,...,44 nur einen Teil des gesamten Wertebereiches, der für den Betriebsparameter p einstellbar sein soll.

Zusätzlich weist der Potentiometerhub 30 einen Funktionsbereich 32 auf. Die verschiedenen Teilbereiche 31, 32 entsprechen keinen unterschiedlichen Bauteilen innerhalb des Potentiometers. Vielmehr stellen sie eine beliebige, von der Steuer- und Auswerteeinheit 60 interpretierte Unterteilung des einstellbaren Widerstandbereichs eines handelsüblichen Potentiometers dar.

Der Funktionsbereich 32 ist als Umschaltbereich 32 gebildet. Eine Potentiometerstellung in dem Umschaltbereich 32 bewirkt ein Umschalten des Parameterintervalls 41,...,44, auf welches der Einstellbereich 31 abgebildet wird. Indem der Einstellbereich 31 auf ein relativ kleines Parameterintervall 41,...,44 abgebildet wird, kann ein Benutzer den Betriebsparameter p präzise und über einen sehr großen Wertebereich einstellen. Prinzipiell kann eine Einstellung beliebig genau erfolgen und der Wertebereich beliebig groß sein.

Die beiden Bereiche 31, 32 sind durch einen Zwischenbereich 38 getrennt. Bei einer Potentiometerstellung in diesem Zwischenbereich 38 wird die zum zuletzt eingestellten Teilbereich 31, 32 gehörende Funktionalität beibehalten. Hierdurch wird zum Beispiel ein unbeabsichtigtes Verlassen des Einstellbereichs 31 nicht automatisch als Umschalten des Parameterintervalls 41,...,44 interpretiert.

Es kann vorgesehen sein, dass ein Umschalten des Parameterintervalls zu einem Parameterintervall mit größeren oder kleineren Parameterwerten abhängig davon erfolgt, ob der Umschaltbereich 32 innerhalb einer vorgegebenen Zeitspanne einmal oder zweimal ausgewählt wird.

Weitere Varianten des erfindungsgemäßen Verfahrens werden näher mit Bezug auf die Figuren 4 bis 6 erläutert.

In Fig. 4 weist der Potentiometerhub 30 einen weiteren Umschaltbereich 33 auf. Dieser ist wie der Umschaltbereich 32 durch einen Zwischenbereich 38 vom Einstellbereich 31 getrennt. Durch Verwendung von zwei Umschaltbereichen 32, 33 können die Parameterintervalle 41,...,44 in einfacher Weise ausgewählt werden. Bei einer Potentiometerstellung im Umschaltbereich 32 erfolgt ein Umschalten des Parameterintervalls zu einem Parameterintervall größerer Werte. Hingegen erfolgt bei einer Potentiometerstellung im Umschaltbereich 33 ein Umschalten des Parameterintervalls zu einem Parameterintervall kleinerer Werte, oder umgekehrt.

Die Abbildung der Potentiometerstellung a auf den Parameter p kann hierbei durch folgende Gleichung beschrieben werden: p = offset + f(a).

Hierbei ist f eine vorgegebene, monotone Funktion und "offset" ist ein konstanter Wert, der durch die Umschaltbereiche 32, 33 geändert werden kann. Durch Positionieren der Potentiometerstellung im Umschaltbereich 32 kann der Summand "offset" um einen Betrag erhöht und durch Positionieren der Potentiometerstellung im Umschaltbereich 33 um einen Betrag reduziert werden. Der Betrag, um den sich der Summand "offset" ändert, kann konstant sein, oder umso größer sein, je häufiger der Umschaltbereich innerhalb einer vorgegebenen Zeitspanne gewählt wurde, oder abhängig von der Größe des aktuell eingestellten Parameterwertes sein oder abhängig vom aktuell gültigen und eingestellten Parameterintervall sein. Bei der letzten Variante ist demgemäß der Vorzustand dafür entscheidend, wie groß das nächste Parameterintervall ist. Alternativ oder ergänzend kann durch Positionieren der Potentiometerstellung in den Umschaltbereichen 32, 33 auch die Funktion f geändert werden.

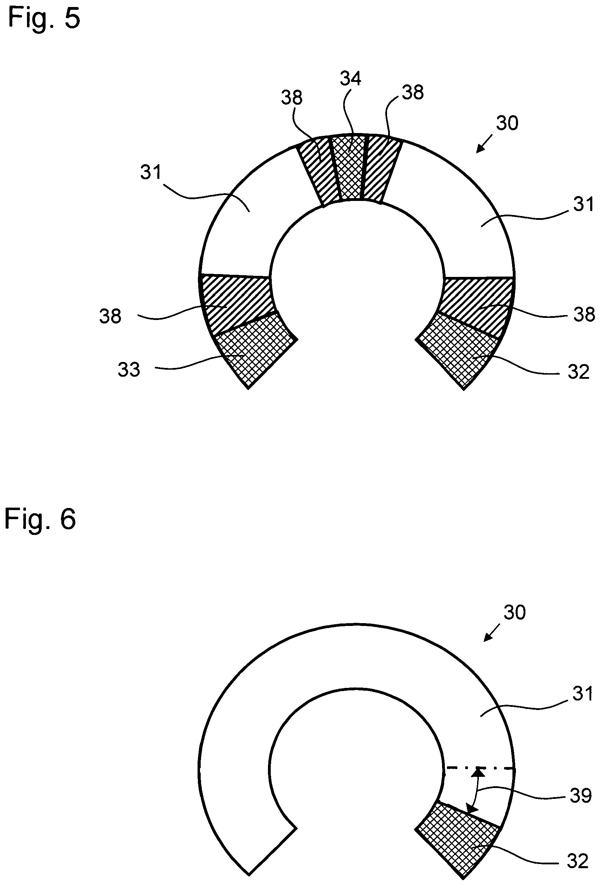

Mit Bezug auf Fig. 5 wird eine weitere Variante des erfindungsgemäßen Verfahrens beschrieben. Hierbei ist der Potentiometerhub 30 nicht nur in einen Einstellbereich 31 und in zwei Umschaltbereiche 32, 33 geteilt, sondern auch in einen Aktivierungsbereich 34. Der Aktivierungsbereich 34 ist durch Zwischenbereiche 38 vom Einstellbereich 31 getrennt, um unbeabsichtigte Einstellungsänderungen zu vermeiden. Durch eine Potentiometerstellung im Aktivierungsbereich 34 wird eine zusätzliche Funktion aktiviert. Hierbei kann es sich zum Beispiel um einen Einlernmodus des Sensors handeln. Durch den Einlernmodus wird ein Betriebsparameter p des Sensors, beispielsweise der Betriebsparameter "Tastweite" eines optischen Sensors, auf einen bestimmten Wert eingestellt. In diesem Fall ist eine zentrale Anordnung des Aktivierungsbereichs 34 vorteilhaft, so dass der Einstellbereich 31 in einen linksseitigen Einstellbereich 31 und einen rechtsseitigen Einstellbereich 31 geteilt wird. Bevorzugt ist mit der Auswahl des Einlernmodus automatisch ein Umschalten des Parameterintervalls, auf welches der Einstellbereich 31 abgebildet wird, verbunden, so dass der durch den Einlernmodus eingestellte Betriebsparameterwert in der Mitte des neu eingestellten Parameterintervalls liegt. Somit kann für eine Feinabstimmung des eingelernten Betriebsparameterwertes eine Verkleinerung des Betriebsparameterwertes durch eine Potentiometerstellung in dem linksseitigen Einstellbereich 31 erfolgen und eine Vergrößerung des Betriebsparameterwertes in dem rechtsseitigen Einstellbereich 31.

Für weitere Zusatzfunktionen kann prinzipiell eine beliebige Anzahl weiterer Aktivierungsbereiche 34 vorgesehen sein. Diese können an einer beliebigen Stelle innerhalb des Potentiometerhubs 30 angeordnet sein. Vorzugsweise werden sie aber an den äußeren Rändern des Potentiometerhubs 30 angeordnet, damit die zum Einstellen des Betriebsparameters p verwendeten Teilbereiche 31, 32, 33, 34 einen zusammenhängenden Bereich bilden.

Als Zusatzfunktion kann auch eine Änderung des Schaltmodus zwischen hell- und dunkelschaltend vorgesehen sein. Unter "hellschaltend" wird verstanden, dass ein Ausgang eines Sensors 10 durchgeschaltet ist, wenn Licht auf den Empfänger des Sensors 10 trifft. Unter "dunkelschaltend" wird verstanden, dass ein Ausgang eines Sensors 10 durchgeschaltet ist, wenn kein Licht auf den Empfänger des Sensors 10 trifft. Auch kann eine Änderung der Größe der durch die Umschaltbereiche 32, 33 auswählbaren Parameterintervalle 41,...,44 sowie eine Änderung einer Kontraststufe für den Sensor 10 vorgesehen sein. Die Kontraststufe gibt die maximale Dämpfung der gemessenen Lichtintensität einer Lichtschranke an, bei der die Lichtschranke gerade noch als nicht unterbrochen interpretiert wird. Weiterhin kann die Zusatzfunktion ein Wechsel des Betriebsparameters p sein, der durch das Potentiometer einstellbar ist.

Mit Bezug auf Fig. 6 wird die Funktionsweise einer erfindungsgemäßen Umschalthysterese beschrieben, die alternativ zu den Zwischenbereichen 38 eingesetzt werden kann. Die Umschalthysterese dient dem Stabilisieren einer gewählten Einstellung eines Parameterintervalls 41,...,44 und verhindert ein unbeabsichtigtes Mehrfach-Auswählen eines Umschalt- oder Aktivierungsbereiches 32, 33, 34. Dazu muss nach einem erfolgten Umschalten des Parameterintervalls 41,...,44 für ein erneutes Umschalten eine Potentiometerstellung eingestellt werden, die von dem für das erfolgte Umschalten maßgeblichen Umschaltbereich 32, 33 um einen vorgegebenen Mindestabstand 39 beabstandet ist, bevor ein erneutes Auswählen des maßgeblichen Umschaltbereiches 32, 33 zu einem erneuten Umschalten des Parameterintervalls 41,...,44 führt. In gleicher Weise muss von einem Aktivierungsbereich 34 die Potentiometerstellung um einen Mindestabstand 39 beabstandet eingestellt werden, bevor ein erneutes Auswählen des Aktivierungsbereiches 34 zu einem erneuten Aktivieren einer Zusatzfunktion führt.

Es ist vorgesehen, dass ein Umschalten des Parameterintervalls 41,...,44 nicht zum selben Zeitpunkt erfolgt, zu dem die Potentiometerstellung in einen Umschaltbereich 32, 33 gestellt wird. Stattdessen muss die Verweilzeit der Potentiometerstellung in diesem Umschaltbereich 32, 33 erst eine vorgegebene Verweildauer erreichen. Dies wird auch als Zeitschloss bezeichnet. Hierdurch kann ein unbeabsichtigtes Umschalten des Parameterintervalls 41,...,44 vermieden werden.

Bevorzugt weist der Sensor 10 eine hier nicht dargestellte visuelle und/oder akustische Anzeigeeinrichtung auf. Mit dieser können die Potentiometerstellung, mindestens ein eingestelltes Parameterintervall und/oder die Einstellungen eventueller Zusatzfunktionen angezeigt werden.

Der in Fig. 2 gezeigte Zahlenstrang stellt als Beispiel einen von 0 bis 30 laufenden Wertebereich eines Betriebsparameters p dar. Dieser Parameter kann z. B. die Tastweite eines optischen Sensors sein. Der Wertebereich kann in eine beliebige Anzahl an Parameterintervallen 41, 42, 43, 44, in diesem Fall in vier Intervalle, unterteilt werden. Mit den Umschaltbereichen 32, 33 wird die Zuordnung des Einstellbereichs 31 auf eines dieser Parameterintervalle 41,...,44 geändert. Im gezeigten Ausführungsbeispiel grenzen die Parameterintervalle 41,...,44 direkt aneinander an, sie können aber auch überlappen. So könnte z. B. das Parameterintervall 43 Werte von 6 bis 18 umfassen und das Parameterintervall 44 Werte von 14 bis 30. Auf diese Weise ist auch eine präzise und einfache Einstellung des Betriebsparameterwertes in den Bereichen der Intervallgrenzen, also in den Bereichen um 14 und um 18 möglich.

Im gezeigten Fall steht die Größe des Parameterintervalls in Zusammenhang mit der Größe des Parameterwertes. Wird beispielsweise ein Parameterintervall um den Parameterwert zwanzig zehnmal so groß gewählt wie ein Parameterintervall um den Parameterwert zwei, so resultiert dies in der gleichen relativen Einstellungsgenauigkeit für einen Benutzer. Alternativ ist aber auch möglich, dass die Größen aller Parameterintervalle 41,...,44 identisch sind.

Der Einstellbereich 31 kann linear auf eines der Parameterintervalle 41,...,44 abgebildet werden. Alternativ kann die Abbildung auch nicht-linear, insbesondere exponentiell sein. Hierdurch ist die relative Einstellungsgenauigkeit innerhalb eines Parameterintervalls 41,...,44 konstant.

Die Parameterintervalle 41,...,44 können zyklisch durchlaufen werden, so dass ein direktes Umschalten zwischen dem Intervall größter Werte und dem Intervall kleinster Werte möglich ist.

Im Folgenden wird die Funktionalität der in Fig. 1 abgebildeten optionalen Schnittstelle 70 des Sensors 10 beschrieben. Ein Einstellen von Betriebsparametern p des Sensors 10 kann über die Schnittstelle 70 erfolgen. Als Schnittstellen 70 können sowohl leitungsgebundene als auch leitungslose Kommunikationsverbindungen zwischen dem Sensor 10 und einem oder mehreren externen Geräten verwendet werden. An den externen Geräten werden Werte für die Betriebsparameter p eingegeben. Die Steuer- und Auswerteeinheit 60 stellt die Betriebsparameter p auf die über die Schnittstelle 70 übertragenen Werte ein. Außerdem ändert die Steuer- und Auswerteeinheit 60 die Abbildung des Einstellbereichs 31 auf ein Parameterintervall 41,...,44, für welches der der aktuellen Potentiometerstellung zugeordnete Wert eines Betriebsparameters p mit dem über die Schnittstelle 70 eingegebenen Wert dieses Betriebsparameters p übereinstimmt. Dies kann beispielsweise dadurch erfolgen, dass die Steuer- und Auswerteeinheit 60 den mit Bezug auf Fig. 4 erläuterten "offset" und/oder die ebenfalls mit Bezug auf Fig. 4 erläuterte Funktion f auf einen passenden Wert einstellt.

Der "offset" und/oder die Funktion f können grundsätzlich einen beliebigen Wert annehmen. Weiterhin können auf Basis der Betriebsparametereinstellungen über die Schnittstelle auch Intervallgrenzen und/oder "offsets" und/oder Funktionen f von benachbarten Parameterintervallen geeignet angepasst werden.

Zusätzlich können über die Schnittstelle 70 Intervallgrenzen der Parameterintervalle 41,...,44 eingestellt werden, welche anschließend mit den Umschaltbereichen 32, 33 ausgewählt werden können. Weiterhin kann über die Schnittstelle 70 aus mehreren Betriebsparametern p ein Betriebsparameter ausgewählt werden, woraufhin der Einstellbereich 31 auf ein Parameterintervall 41,...,44 des ausgewählten Betriebsparameters p abgebildet wird. Außerdem können ein Start eines Einlernmodus des Sensors 10, eine Änderung des Schaltmodus zwischen hell- und dunkelschaltend und/oder eine Änderung einer Kontraststufe für den Sensor 10 über die Schnittstelle 70 eingestellt werden.

Durch das beschriebene erfindungsgemäße Verfahren und den erfindungsgemäßen Sensor kann vorteilhaft mit kostengünstigen Mitteln ein Betriebsparameter eines Sensors präzise über einen großen Wertebereich eingestellt werden.

## Patentansprüche

1. Verfahren zum Einstellen von Betriebsparametern eines Sensors, insbesondere zum Einstellen einer Tastweite und/oder einer Empfindlichkeit bei einem optischen Sensor,
wobei der Sensor (10) zum Einstellen mindestens eines Betriebsparameters (p) mindestens ein analoges Stellglied (20), insbesondere ein Potentiometer (20), aufweist und
wobei ein Hub (30) des analogen Stellglieds (20) einen Einstellbereich (31) und einen Funktionsbereich (32) aufweist,
bei dem eine Stellung des analogen Stellglieds (20) gemessen wird,
bei dem der Einstellbereich (31) monoton auf ein Parameterintervall (41,...,44) abgebildet wird und
bei dem ein zu einer gemessenen Stellung des analogen Stellglieds (20) gehörender Betriebsparameterwert für den Sensor übernommen wird, wobei der Funktionsbereich (32) als Umschaltbereich (32) gebildet ist, und bei einer Stellung des analogen Stellglieds (20) in dem Umschaltbereich (32) ein Umschalten des Parameterintervalls (41,...,44) erfolgt, auf welches der Einstellbereich (31) abgebildet wird, **dadurch gekennzeichnet, dass** genau ein Umschalten des Parameterintervalls (41,...,44) erfolgt, wenn eine Verweilzeit der Stellung des analogen Stellglieds (20) in einem Umschaltbereich (32, 33) eine vorgegebene Verweildauer erreicht.

2. Verfahren nach Anspruch 1,
**dadurch gekennzeichnet,**
**dass** der Hub (30) des analogen Stellglieds (20) einen weiteren Umschaltbereich (33) aufweist, wobei bei Stellung des analogen Stellglieds (20) im Umschaltbereich (32) ein Umschalten zu einem Parameterintervall (41,...,44) mit größeren Parameterwerten erfolgt und
wobei bei Stellung des analogen Stellglieds (20) in dem weiteren Umschaltbereich (33) ein Umschalten zu einem Parameterintervall (41,...,44) mit kleineren Parameterwerten erfolgt.

3. Verfahren nach Anspruch 1 oder 2,
**dadurch gekennzeichnet,**
**dass** ein Umschalten zu einem Parameterintervall (41,...,42) mit größeren oder kleineren Parameterwerten erfolgt, abhängig davon, ob ein Umschaltbereich (32, 33) innerhalb einer vorgegebenen Zeitspanne einmal oder zweimal ausgewählt wird.

4. Verfahren nach einem der Ansprüche 1 bis 3,
**dadurch gekennzeichnet,**
**dass** die Parameterintervalle (41,...,44) beim Umschalten der Parameterintervalle (41,...,44) zyklisch durchlaufen werden.

5. Verfahren nach einem der Ansprüche 1 bis 4,
**dadurch gekennzeichnet,**
**dass** zum Stabilisieren einer gewählten Einstellung eines Parameterintervalls (41,...,44) eine Umschalthysterese vorgesehen ist.

6. Verfahren nach einem der Ansprüche 1 bis 5,
**dadurch gekennzeichnet,**
**dass** das Umschalten der Parameterintervalle (41,...,44) auf jeweils direkt angrenzende Parameterintervalle (41,...,44) und/oder auf ein Parameterintervall (41,...,44) erfolgt, das mit einem zuvor ausgewählten Parameterintervall (41,...,44) überlappt.

7. Verfahren nach einem der Ansprüche 1 bis 6,
**dadurch gekennzeichnet,**
**dass** der Hub (30) des analogen Stellglieds (20) mindestens einen Aktivierungsbereich (34) aufweist und
**dass** bei einer Stellung des analogen Stellglieds (20) in dem Aktivierungsbereich (34) eine zusätzliche Funktion, insbesondere ein Einlernmodus, eine Änderung des Schaltmodus zwischen hell- und dunkelschaltend, eine Änderung der Größe der Parameterintervalle (41,...,44), eine Änderung einer Kontraststufe für den Sensor (10) und/oder ein Wechsel des Betriebsparameters (p), der durch das analoge Stellglied (20) einstellbar ist, aktiviert wird.

8. Verfahren nach einem der Ansprüche 1 bis 7,
**dadurch gekennzeichnet,**
**dass** über eine Schnittstelle (70) des Sensors (10) Werte von Betriebsparametern (p) des Sensors (10) eingegeben werden,
**dass** von der Steuer- und Auswerteeinheit (60) die Betriebsparameter (p) auf die über die Schnittstelle (70) eingegebenen Werte eingestellt werden, dass von der Steuer- und Auswerteeinheit (60) der Einstellbereich (31) auf ein Parameterintervall (41,...,44) abgebildet wird, für welches der einer aktuellen Stellung des analogen Stellglieds (20) zugeordnete Wert eines Betriebsparameters (p) mit dem über die Schnittstelle (70) eingegebenen Wert dieses Betriebsparameters (p) übereinstimmt,
und/oder zusätzliche Funktionen des Sensors (10), insbesondere über die Schnittstelle (70), eingestellt oder aktiviert werden.

9. Verfahren nach Anspruch 8,
**dadurch gekennzeichnet,**
**dass** bei einer Eingabe der Werte von Betriebsparametern (p) über die Schnittstelle (70) die Intervallgrenzen eines Parameterintervalls (41,...,44) und/oder Intervallgrenzen benachbarter Parameterintervalle (41,...,44) geeignet angepasst werden.

10. Verfahren nach Anspruch 8 oder 9,
**dadurch gekennzeichnet,**
**dass** bei einer Eingabe der Werte von Betriebsparametern (p) über die Schnittstelle (70) geeignete Funktionen (f) ermittelt werden, die zur Abbildung des Einstellbereichs (31) auf ein Parameterintervall (41,...,44) und/oder auf benachbarte Parameterintervalle (41,...,44) verwendet werden.

11. Verfahren nach einem der Ansprüche 1 bis 10,
**dadurch gekennzeichnet,**
**dass** Teilbereiche (31,..,34) des Hubs (30) des analogen Stellglieds (20) durch Zwischenbereiche (38) getrennt sind, in denen die Steuer- und Auswerteeinheit (60) eine zum zuletzt eingestellten Teilbereich (31,..,34) gehörende Funktionalität beibehält oder keine Funktion ausführt.

12. Sensor zum Nachweis einer physikalischen Messgröße, insbesondere zum Nachweis von Objekten,
mit einem Sensorelement (50) zum Messen der physikalischen Messgröße, mit einer Steuer- und Auswerteeinheit (60) zum Ansteuern des Sensorelements (50) und zum Auswerten der von dem Sensorelement (50) gelieferten Messdaten und
mit einem mit der Steuer- und Auswerteeinheit (60) zusammenwirkenden analogen Stellglied (20), insbesondere einem Potentiometer (20), zum Einstellen von Betriebsparametern (p) des Sensors (10),
wobei ein Hub (30) des analogen Stellglieds (20) mindestens einen Einstellbereich (31) und einen Funktionsbereich (32) aufweist,
wobei die Steuer- und Auswerteeinheit (60) eingerichtet ist zum monotonen Abbilden des Einstellbereichs (31) auf ein Parameterintervall (41,...,44) und zum Übernehmen eines zu einer gemessenen Stellung des analogen Stellglieds gehörenden Betriebsparameterwertes für den Sensor (10), wobei der Funktionsbereich (32) als Umschaltbereich (32) gebildet ist und die Steuer- und Auswerteeinheit (60) eingerichtet ist zum Umschalten des Parameterintervalls (41,...,44), auf welches der Einstellbereich (31) abgebildet ist, bei einer Stellung des analogen Stellglieds (20) in dem Umschaltbereich (32), wobei genau ein Umschalten des Parameterintervalls (41,...,44) erfolgt, wenn eine Verweilzeit der Stellung des analogen Stellglieds (20) in einem Umschaltbereich (32, 33) eine vorgegebene Verweildauer erreicht.

13. Sensor nach Anspruch 12,
**dadurch gekennzeichnet,**
**dass** eine, insbesondere optische und/oder akustische, Anzeigeeinrichtung zum Anzeigen der Stellung des analogen Stellglieds (20) und/oder mindestens eines eingestellten Parameterintervalls (41,...,44) und/oder zur Anzeige einer ausgelösten Umschaltfunktion vorhanden ist.

14. Sensor nach Anspruch 12 oder 13,
**dadurch gekennzeichnet,**
**dass** der Hub (30) des analogen Stellglieds (20) mindestens einen weiteren Umschaltbereich (33) aufweist und
**dass** der Einstellbereich (31) zwischen dem Umschaltbereich (32) und dem weiteren Umschaltbereich (33) angeordnet ist.

15. Sensor nach einem der Ansprüche 12 bis 14,
**dadurch gekennzeichnet,**
**dass** der Hub (30) des analogen Stellglieds (20) zum Aktivieren zusätzlicher Funktionen mindestens einen Aktivierungsbereich (34) aufweist und dass der Aktivierungsbereich (34) benachbart zu den Umschaltbereichen (32, 33) angeordnet ist oder den Einstellbereich (31) teilt.

## Claims

1. Method for setting operating parameters of a sensor, in particular for setting a scanning range and / or a sensitivity for an optical sensor,
wherein the sensor (10) has at least one analogue actuator (20), in particular a potentiometer (20), for setting at least one operating parameter (p), and
wherein a stroke (30) of the analogue actuator (20) has a setting range (31) and a function range (32),
wherein a position of the analogue actuator (20) is measured,
wherein the setting range (31) is monotonically mapped to a parameter interval (41, ...,44), and
wherein an operating parameter value belonging to a measured position of the analogue actuator (20) is adopted for the sensor,
wherein the function range (32) is formed as a switchover range (32), and
when the analogue actuator (20) is in a position in the switchover range (32) a switchover of the parameter interval (41, ..., 44) takes place, to which the setting range (31) is mapped,
**characterised in that**
a switchover of the parameter interval (41, ..., 44) takes place precisely when a retention time of the position of the analogue actuator (20) in a switchover range (32, 33) reaches a predefined retention time.

2. Method according to claim 1,
**characterised in that**
the stroke (30) of the analogue actuator (20) has a further switchover range (33), wherein, when the analogue actuator (20) is positioned in the switchover range (32), a switchover to a parameter interval (41, ..., 44) with greater parameter values is realised and
wherein, when the analogue actuator (20) is positioned in the further switchover range (33), a switchover to a parameter interval (41, ..., 44) with lower parameter values is realised.

3. Method according to claim 1 or 2,
**characterised in that**
a switchover to a parameter interval (41, ..., 42) with greater or lower parameter values is realised in dependence on whether a switchover range (32, 33) is selected one or twice within a predefined timespan.

4. Method according to one of claims 1 to 3,
**characterised in that**
the parameter intervals (41, ..., 44) are passed through cyclically upon switchover of the parameter interval (41, ..., 44).

5. Method according to one of claims 1 to 4,
**characterised in that**
a switchover hysteresis is provided to stabilise a selected setting of a parameter interval (41, ..., 44).

6. Method according to one of claims 1 to 5,
**characterised in that**
the switchover of the parameter intervals (41, ..., 44) to respectively directly adjacent parameter intervals (41, ..., 44) and / or to a parameter interval (41, ..., 44) that overlaps with a previously selected parameter interval (41, ..., 44) is realised.

7. Method according to one of claims 1 to 6,
**characterised in that**
the stroke (30) of the analogue actuator (20) has at least one activating range (34) and
when the analogue actuator (20) is positioned in the activating range (34), an additional function, in particular a learning mode, a change in the switching mode between light and dark switching, a change in the size of the parameter interval (41, ..., 44), a change in a contrast level for the sensor (10) and / or a change of the operating parameter (p), which can be set by the analogue actuator (20), is activated.

8. Method according to one of claims 1 to 7,
**characterised in that**
values of operating parameters (p) of the sensor (10) are input over an interface (70) of the sensor (10),
the operating parameters (p) are set by the control and evaluation unit (60) to the values input over the interface (70),
the setting range (31) is mapped by the control and evaluation unit (60) to a parameter interval (41, ..., 44), for which the value of an operating parameter (p) assigned to a current position of the analogue actuator (20) coincides with the value of this operating parameter (p) input over the interface (70),
and / or additional functions of the sensor (10) are set or activated, in particular over the interface (70).

9. Method according to claim 8,
**characterised in that**
upon inputting of the values of operating parameters (p) over the interface (70), the interval thresholds of a parameter interval (41, ..., 44) and / or interval thresholds of adjacent parameter intervals (41, ..., 44) are appropriately adapted.

10. Method according to claim 8 or 9,
**characterised in that**
upon inputting of the values of operating parameters (p) over the interface (70), suitable functions (f) are determined, which are used to map the setting range (31) to a parameter interval (41, ..., 44) and / or to adjacent parameter intervals (41, ..., 44).

11. Method according to one of claims 1 to 10,
**characterised in that**
partial ranges (31, ..., 34) of the stroke (30) of the analogue actuator (20) are separated by intermediate ranges (38), in which the control and evaluation unit (60) retains a functionality belonging to the most recently set partial range (31, ..., 34) or does not perform any function.

12. Sensor for detecting a physical measurement variable, in particular for the detection of objects, having
a sensor element (50) for measuring the physical measurement variable,
a control and evaluation unit (60) for controlling the sensor element (50) and for evaluating the measurement data supplied by the sensor element (50), and
an analogue actuator (20), in particular a potentiometer (20), cooperating with the control and evaluation unit (60), for setting operating parameters (p) of the sensor (10),
wherein a stroke (30) of the analogue actuator (20) has at least one setting range (31) and one function range (32),
wherein the control and evaluation unit (60) is designed to monotonically map the setting range (31) to a parameter interval (41, ..., 44) and to adopt an operating parameter value belonging to a measured position of the analogue actuator for the sensor (10),
wherein the function range (32) is formed as a switchover range (32) and
the control and evaluation unit (60) is designed to switch over the parameter interval (41, ..., 44), to which the setting range (31) is mapped, if the analogue actuator (20) is positioned in the switchover range (32), wherein a switchover of the parameter interval (41, ..., 44) is realised precisely when a retention time of the position of the analogue actuator (20) in a switchover range (32, 33) reaches a predefined retention time.

13. Sensor according to claim 12,
**characterised in that**
a display device, in particular optical and / or acoustic, is present for displaying the position of the analogue actuator (20) and / or at least one set parameter interval (41, ..., 44) and / or for displaying a triggered switchover function.

14. Sensor according to claim 12 or 13,
**characterised in that**
the stroke (30) of the analogue actuator (20) has at least one further switchover range (33) and
the setting range (31) is arranged between the switchover range (32) and the further switchover range (33).

15. Sensor according to one of claims 12 to 14,
**characterised in that**
the stroke (30) of the analogue actuator (20) has at least one activating range (34) to activate additional functions and
the activating range (34) is arranged adjacently to the switchover ranges (32, 33) or intersects the setting range (31).

## Revendications

1. Procédé de réglage de paramètres de fonctionnement d'un capteur, en particulier de réglage d'une plage de détection et/ou d'une sensibilité pour un capteur optique,
le capteur (10) présentant au moins un organe de réglage analogique (20), en particulier un potentiomètre (20), pour le réglage d'au moins un paramètre de fonctionnement (p) et
une course (30) de l'organe de réglage analogique (20) présentant une zone de réglage (31) et une zone de fonctionnement (32),
dans lequel une position de l'organe de réglage analogique (20) est mesurée, dans lequel la zone de réglage (31) est représentée de façon monotone sur un intervalle de paramètre (41, ..., 44) et
dans lequel une valeur de paramètre de fonctionnement afférente à une position mesurée de l'organe de réglage analogique(20) est adoptée pour le capteur,
la zone de fonctionnement (32) étant réalisée sous forme de zone de commutation (32), et
dans le cas d'une position de l'organe de réglage analogique (20) dans la zone de commutation (32), une commutation de l'intervalle de paramètre (41, ..., 44) a lieu, sur lequel la zone de réglage (31) est représentée,
**caractérisé en ce**
**qu'**exactement une commutation de l'intervalle de paramètre (41, ..., 44) a lieu lorsqu'un temps de séjour de la position de l'organe de réglage analogique (20) dans une zone de commutation (32, 33) atteint une durée de séjour prédéfinie.

2. Procédé selon la revendication 1,
**caractérisé en ce**
**que** la course (30) de l'organe de réglage analogique (20) présente une autre zone de commutation (33), une commutation à un intervalle de paramètre (41, ..., 44) avec des valeurs de paramètre plus grandes ayant lieu en cas de position de l'organe de réglage analogique (20) dans la zone de commutation (32),et une commutation à un intervalle de paramètre (41, ..., 44) avec des valeurs de paramètre plus petites ayant lieu en cas de position de l'organe de réglage analogique (20) dans l'autre zone de commutation (33).

3. Procédé selon la revendication 1 ou 2,
**caractérisé en ce**
**qu'**une commutation à un intervalle de paramètre (41, ..., 42) avec des valeurs de paramètre plus grandes ou plus petites a lieu, selon qu'une zone de commutation (32, 33) est sélectionnée une fois ou deux fois dans un laps de temps prédéfini.

4. Procédé selon l'une des revendications 1 à 3,
**caractérisé en ce**
**que** les intervalles de paramètre (41, ..., 44) sont passés cycliquement lors de la commutation des intervalles de paramètre (41, ..., 44).

5. Procédé selon l'une des revendications 1 à 4,
**caractérisé en ce**
**qu'**une hystérèse de commutation est prévue pour stabiliser un réglage sélectionné d'un intervalle de paramètre (41, ..., 44).

6. Procédé selon l'une des revendications 1 à 5,
**caractérisé en ce**
**que** la commutation des intervalles de paramètre (41, ..., 44) a lieu à chaque fois sur des intervalles de paramètre (41, ..., 44) directement adjacents et/ou sur un intervalle de paramètre (41, ..., 44), qui chevauche un intervalle de paramètre (41, ..., 44) sélectionné auparavant.

7. Procédé selon l'une des revendications 1 à 6,
**caractérisé en ce**
**que** la course (30) de l'organe de réglage analogique (20) présente au moins une zone d'activation (34) et
**que** dans le cas d'une position de l'organe de réglage analogique (20) dans la zone d'activation (34), une fonction supplémentaire, en particulier un mode d'apprentissage, une modification du mode de commutation entre fonction claire et foncée, une modification de la grandeur des intervalles de paramètre (41, ..., 44), une modification d'un niveau de contraste pour le capteur (10) et/ou un changement du paramètre de fonctionnement (p), qui est réglable par l'autre l'organe de réglage analogique (20), est activée.

8. Procédé selon l'une des revendications 1 à 7,
**caractérisé en ce**
**que** des valeurs de paramètres de fonctionnement (p) du capteur (10) sont saisies via une interface (70) du capteur (10),
**que** les paramètres de fonctionnement (p) sont réglés sur les valeurs saisies via l'interface (70) par l'unité de commande et d'évaluation (60),
**que** la zone de réglage (31) est représentée sur un intervalle de paramètre (41, ..., 44) par l'unité de commande et d'évaluation (60), pour lequel la valeur d'un paramètre de fonctionnement (p) affectée à une position actuelle de l'organe de réglage analogique (20) coïncide avec la valeur de ce paramètre de fonctionnement (p) saisie via l'interface (70),
et/ou des fonctions supplémentaires du capteur (10) sont réglées ou activées, en particulier via l'interface (70).

9. Procédé selon la revendication 8,
**caractérisé en ce**
**que** lors d'une saisie des valeurs de paramètres de fonctionnement (p) via l'interface (70), les limites d'intervalle d'un intervalle de paramètre (41, ..., 44) et/ou limites d'intervalle d'intervalles de paramètre (41, ..., 44) adjacents sont adaptées de manière appropriée.

10. Procédé selon la revendication 8 ou 9,
**caractérisé en ce**
**que** lors d'une saisie des valeurs de paramètres de fonctionnement (p) via l'interface (70), des fonctions appropriées (f) sont déterminées, qui sont utilisées pour la représentation de la zone de réglage (31) sur un intervalle de paramètre (41, ..., 44) et/ou sur des intervalles de paramètre (41, ..., 44) adjacents.

11. Procédé selon l'une des revendications 1 à 10,
**caractérisé en ce**
**que** des zones partielles (31, ..., 34) de la course (30) de l'organe de réglage analogique (20) sont séparées par des zones intermédiaires (38), dans lesquelles l'unité de commande et d'évaluation (60) maintient une fonctionnalité afférente à la dernière zone partielle (31, ..., 34) réglée ou ne réalise aucune fonction.

12. Capteur de détection d'une grandeur de mesure physique, en particulier de détection d'objets,
avec un élément de détection (50) pour mesurer la grandeur physique à mesurer,
avec une unité de commande et d'évaluation (60) pour commander l'élément de détection (50) et pour évaluer les données de mesure livrées par l'élément de détection (50) et
avec un organe de réglage analogique (20) coopérant avec l'unité de commande et d'évaluation (60), en particulier un potentiomètre (20), pour le réglage de paramètres de fonctionnement (p) du capteur (10),
une course (30) de l'organe de réglage analogique (20) présentant au moins une zone de réglage (31) et une zone de fonctionnement (32),
l'unité de commande et d'évaluation (60) étant conçue pour la représentation monotone de la zone de réglage (31) sur un intervalle de paramètre (41, ..., 44) et pour l'adoption d'une valeur de paramètre de fonctionnement afférente à une position mesurée de l'organe de réglage analogique pour le capteur (10),
la zone de fonctionnement (32) étant réalisée sous forme de zone de commutation (32) et
l'unité de commande et d'évaluation (60) étant conçue pour la commutation de l'intervalle de paramètre (41, ..., 44), sur lequel la zone de réglage (31) est représentée, dans le cas d'une position de l'organe de réglage analogique (20) dans la zone de commutation (32), dans lequel exactement une commutation de l'intervalle de paramètre (41, ..., 44) a lieu lorsqu'un temps de séjour de la position de l'organe de réglage analogique (20) dans une zone de commutation (32, 33) atteint une durée de séjour prédéfinie.

13. Capteur selon la revendication 12,
**caractérisé en ce**
**qu'**un dispositif d'affichage, en particulier optique et/ou acoustique, pour l'affichage de la position de l'organe de réglage analogique (20) et/ou d'au moins un intervalle de paramètre (41, ..., 44) réglé et/ou pour l'affichage d'une fonction de commutation déclenchée est présent.

14. Capteur selon la revendication 12 ou 13,
**caractérisé en ce**
**que** la course (30) de l'organe de réglage analogique (20) présente au moins une autre zone de commutation (33) et
**que** la zone de réglage (31) est agencée entre la zone de commutation (32) et l'autre zone de commutation (33).

15. Capteur selon l'une quelconque des revendications 12 à 14,
**caractérisé en ce**
**que** la course (30) de l'organe de réglage analogique (20) présente au moins une zone d'activation (34) pour l'activation de fonctions supplémentaire et
**que** la zone d'activation (34) est agencée de manière adjacente aux zones de commutation (32, 33) ou sépare la zone de réglage (31).
